# EUROPEAN PATENT APPLICATION

(11) **EP 3 089 009 A1**
(43) Date of publication of application: **02.11.2016**
(21) Application number: 13900058.2
(22) Date of filing: 25.12.2013
(51) Int. Cl.: G06F 3/048

(54) **DISPLAY PROCESSING METHOD FOR TRANSIENT INTERFACE, AND TERMINAL**

(71) Applicant: Yulong Computer Telecommunication Scientific (Shenzhen) Co. Ltd., Shenzhen, Guangdong 518057 (CN)
(72) Inventor: SHENG, Jingen, Shenzhen Guangdong 518057 (CN)
(74) Representative: Dr. Weitzel & Partner
(86) International application number: PCT/CN2013/090473
(87) International publication number: WO 2015/096076

(57) **Abstract**

Provided is a display processing method for a transient interface, comprising: displaying a transient interface on a screen interface of a terminal; after a first preset length of time, switching from the transient interface to a target interface, and displaying a preset identifier on the screen interface; and according to a received preset operation performed on the preset identifier, displaying the transient interface or information included within the transient interface on the screen interface. Correspondingly, also provided is a terminal. The present invention can satisfy different requirements of different users with regard to a transient interface, and prevents the user experience from being affected by a display time being too long or too short.

## Description

### Field of the Invention

The present invention relates to the technical field of terminal control, and specifically relates to a display processing method for a transient interface and a terminal.

### Background of the Invention

Transient interfaces are interfaces that can automatically disappear within a certain period of time after appearing on terminals. The transient interfaces are of multiple different types, for example:
Under one condition, for example, when an application program is started, closed or switched, due to the difference of the running speed of the terminal, some preset transitional interfaces are displayed in order not to affect the user experience before the operation is completed, for example when the application program is started, some jokes or historical stories and the like are displayed on the started interfaces. Under another condition, some function options can be provided for a user through transient interfaces, so that the user can quickly implement corresponding processing through the transient interfaces. For example, after a call ends, functional interfaces for storing contact information, sending a short message to the contact and the like are provided for the user, so that the user does not need to manually enable corresponding interfaces.

However, the transient interfaces always have different demand conditions for different users. Part of users desire to acquire information or implement some functions through the transient interfaces, so the transient interfaces should have longer display time, otherwise, all information cannot be completely read, or the functions to be implemented cannot be selected timely; other users may desire to enter target interfaces as quickly as possible, namely the transient interfaces need to have shorter display time, otherwise, it may be considered that application programs are "stuck" or have optimization problems and the like.

Therefore, how to deal with different requirements and give a transient interface display solution capable of satisfying the requirements of various users has become a technical problem to be solved currently.

### Summary of the Invention

Just based on the above problems, a new technical solution is provided, which can satisfy different requirements of different users with regard to a transient interface and prevents the user experience from being affected by a display time being too long or too short.

In view of this, the present invention provides a display processing method for a transient interface, including: displaying a transient interface on a screen interface of a terminal; after a first preset length of time, switching from the transient interface to a target interface, and displaying a preset identifier on the screen interface; and according to a received preset operation performed on the preset identifier, displaying the transient interface or information included within the transient interface on the screen interface.

In the technical solution, the preset identifier is displayed on the screen interface after the transient interface disappears, so that the display time (i.e. the first preset length of time) of the transient interface can be set to be shorter, for example, just the time needed for an actual loading or processing procedure of an application program, then the target interface can be viewed or operated within the shortest time for a user who does not desire to see the transient interface, the transient interface or the information in the transient interface can be redisplayed through the preset identifier for a user who desires to see the content of the transient interface or operates the transient interface, and the situation that complete content cannot be viewed or the transient interface cannot be timely operated due to too short display time of the transient interface is avoided.

Of course, the disappearance control of the transient interface obviously can be judged by adopting other conditions besides the time condition. For example, as a specific embodiment, whether a preset gesture operation is received (or whether a preset gesture operation is received within a preset time) can be judged, and the transient interface disappears under the condition that the preset gesture operation is received.

Meanwhile, the preset identifier can be set to be very small and even can be set to be semitransparent, and a user can change its display position on the screen interface by dragging for example, so that even if the preset identifier is displayed on the screen interface, it will not affect the viewing or operation of the user on the target interface. Specifically, the pattern, size, transparency and the like of the preset identifier can be preset by the manufacturer or set by the user according to the use habit.

The preset operation on the preset identifier can include: click, double click, long press, drag, drag for forming a preset locus and the like on the preset identifier.

In the above technical solution, preferably, when the preset operation is received or the preset operation is not received within a second preset length of time, the displaying of the preset identifier is stopped.

In the technical solution, although the preset identifier can be set to be very small or semitransparent and the like, it may still shield the content of the target interface or be clicked by a user, thus affecting the use of the user. Therefore, the preset identifier disappears after the second preset length of time to avoid the influence on the use of the user as much as possible.

In any above technical solution, preferably, the method further includes: performing statistics on the number of times and/or the frequency that the transient interface or the information included within the transient interface is called out through the present identifier; if the number of times and/or the frequency are greater than or equal to a preset number of times and/or a preset frequency, prolonging the first preset length of time and/or the second preset length of time.

In the technical solution, the user's preference of requirement for the transient interface can be learnt by the above statistic operation. For example, when the number of times and/or the frequency are relatively high (greater than or equal to the preset number of times and/or the preset frequency), it indicates that the user tends to view or utilize the transient interface, then through prolonging the first preset length of time, the user can have longer time to view or operate the transient interface; through prolonging the second preset length of time, the user can have longer time to call out the transient interface or the information included within the transient interface and then view or operate the transient interface.

In any above technical solution, preferably, the method further includes: displaying an initial interface on the screen interface; and when receiving a switching instruction to the target interface, switching from the initial interface to the transient interface.

In the technical solution, as a preferred implementation, the transient interface may appear in the interface switching process, and the transient interface realizes interface switching transition or provides an operating function on the initial interface or the target interface for a user.

In the above technical solution, preferably, the initial interface and the target interface belong to different functional interfaces in the same application program; or the initial interface and the target interface belong to functional interfaces in different application programs respectively.

In the technical solution, no matter on the different functional interfaces in the same application program or on the functional interfaces in different application programs, both the transient interface and the preset identifier can be displayed, so that "transition" in the interface switching process can be smoothly realized, and different requirements of different users for the transient interface can be met.

In the above technical solution, preferably, when the initial interface belongs to a first application program and the target interface belongs to a second application program, the switching instruction includes: a close instruction on the first application program, or a start instruction or collaboration instruction on the second application program.

In the technical solution, the first application program and the second application program may be any application programs in the terminal. For example, the second application program may be any application program when the user starts the first application program, specifically, the second application program may be a desktop launcher (the user previously starts the first application program through the application icon of the first application program), or other application program (the user previously calls the first application program through a corresponding calling interface on the interface of the second application program).

Of course, the first application program may also be a desktop launcher, and when the first application program is the desktop launcher, the switching instruction may be a start instruction on the second application program. Moreover, when neither the first application program nor the second application program is a desktop launcher, it indicates that the first application program has a calling interface for the second application program, and collaborative calling of the second application program is realized through the collaboration instruction.

In the above technical solution, preferably, when the initial interface belongs to the first application program and the target interface belongs to the second application program, the method further includes: acquiring application information and/or to-be-processed events of the first application program; and displaying the application information and/or to-be-processed events within the preset identifier.

In the technical solution, the first application program is an application program displayed on the terminal before the interface switching operation of the present invention; the application information may include e.g. the name, icon and the like of the first application program, so that the user can be reminded of relevant condition of the first application program by the application information; the to-be-processed events may include messages received in the first application program, update prompt and the like, and further, may include the number, sender, content or summary of the aforementioned messages and the like, so that on the interface of the second application program, the user can easily learn the condition of the first application program without executing specific interface switching.

In any above technical solution, preferably, the process of displaying the information included within the transient interface according to the received preset operation performed on the preset identifier includes: extracting characters, images and/or functional interfaces included within the transient interface and displaying the same on the screen interface.

In the technical solution, the transient interface only has part of valid contents, e.g. characters, images, functional interfaces, etc., and then merely part of or all of the contents can be called out, so that the user can quickly acquire valid information. The present invention further provides a terminal, including: a switching execution unit, used for displaying a transient interface on a screen interface of the terminal, and after a first preset length of time, switching from the transient interface to a target interface; an identifier display unit, used for displaying a preset identifier on the screen interface when the screen interface is switched from the transient interface to the target interface; and a display control unit, used for, according to a received preset operation performed on the preset identifier, displaying the transient interface or information included within the transient interface on the screen interface.

In the technical solution, the preset identifier is displayed on the screen interface after the transient interface disappears, so that the display time (i.e. the first preset length of time) of the transient interface can be set to be shorter, for example, just the time needed for an actual loading or processing procedure of an application program, then the target interface can be viewed or operated within the shortest time for a user who does not desire to see the transient interface, the transient interface or the information in the transient interface can be redisplayed through the preset identifier for a user who desires to see the content of the transient interface or operates the transient interface, and the situation that complete content cannot be viewed or the transient interface cannot be timely operated due to too short display time of the transient interface is avoided.

Of course, the disappearance control of the transient interface obviously can be judged by adopting other conditions besides the time condition. For example, as a specific embodiment, whether a preset gesture operation is received (or whether a preset gesture operation is received within a preset time) can be judged, and the transient interface disappears under the condition that the preset gesture operation is received.

Meanwhile, the preset identifier can be set to be very small and even can be set to be semitransparent, and a user can change its display position on the screen interface by dragging for example, so that even if the preset identifier is displayed on the screen interface, it will not affect the viewing or operation of the user on the target interface. Specifically, the pattern, size, transparency and the like of the preset identifier can be preset by the manufacturer or set by the user according to the use habit.

The preset operation on the preset identifier can include: click, double click, long press, drag, drag for forming a preset locus and the like on the preset identifier.

In the above technical solution, preferably, the identifier display unit is further used for: when the terminal receives the preset operation or the terminal does not receive the preset operation within a second preset length of time, stopping the displaying of the preset identifier.

In the technical solution, although the preset identifier can be set to be very small or semitransparent and the like, it may still shield the content of the target interface or be clicked by a user, thus affecting the use of the user. Therefore, the preset identifier disappears after the second preset length of time to avoid the influence on the use of the user as much as possible.

In any above technical solution, preferably, the terminal further includes: a statistical unit, used for performing statistics on the number of times and/or the frequency that the transient interface or the information included within the transient interface is called out through the present identifier; and a delay unit, used for, if the number of times and/or the frequency are greater than or equal to a preset number of times and/or a preset frequency, prolonging the first preset length of time and/or the second preset length of time.

In the technical solution, the user's preference of requirement for the transient interface can be learnt by the above statistic operation. For example, when the number of times and/or the frequency are relatively high (greater than or equal to the preset number of times and/or the preset frequency), it indicates that the user tends to view or utilize the transient interface, and through prolonging the first preset length of time, the user can have longer time to view or operate the transient interface; through prolonging the second preset length of time, the user can have longer time to call out the transient interface or the information included within the transient interface, and then view or operate the transient interface.

In any above technical solution, preferably, the switching execution unit is further used for: when displaying an initial interface on the screen interface and receiving a switching instruction to the target interface, switching from the initial interface to the transient interface.

In the technical solution, as a preferred implementation, the transient interface may appear in the interface switching process, and the transient interface realizes interface switching transition or provides an operating function on the initial interface or the target interface for a user.

In the above technical solution, preferably, the initial interface and the target interface belong to different functional interfaces in the same application program; or the initial interface and the target interface belong to functional interfaces in different application programs respectively.

In the technical solution, no matter on the different functional interfaces in the same application program or on the functional interfaces in different application programs, both the transient interface and the preset identifier can be displayed, so that "transition" in the interface switching process can be smoothly realized, and different requirements of different users for the transient interface can be met.

In the above technical solution, preferably, when the initial interface belongs to a first application program and the target interface belongs to a second application program, the switching instruction includes: a close instruction on the first application program, or a start instruction or collaboration instruction on the second application program.

In the technical solution, the first application program and the second application program may be any application programs in the terminal. For example, the second application program may be any application program when the user starts the first application program, specifically, the second application program may be a desktop launcher (the user previously starts the first application program through the application icon of the first application program), or other application program (the user previously calls the first application program through a corresponding calling interface on the interface of the second application program).

Of course, the first application program may also be a desktop launcher, and when the first application program is the desktop launcher, the switching instruction may be a start instruction on the second application program. Moreover, when neither the first application program nor the second application program is a desktop launcher, it indicates that the first application program has a calling interface for the second application program, and collaborative calling of the second application program is realized through the collaboration instruction.

In the above technical solution, preferably, when the initial interface belongs to the first application program and the target interface belongs to the second application program, the identifier display unit is further used for: acquiring application information and/or to-be-processed events of the first application program; and displaying the application information and/or to-be-processed events within the preset identifier.

In the technical solution, the first application program is an application program displayed on the terminal before the interface switching operation of the present invention; the application information may include e.g. the name, icon and the like of the first application program, so that the user can be reminded of relevant condition of the first application program by the application information; the to-be-processed events may include messages received in the first application program, update prompt and the like, and further, may include the number, sender, content or summary of the messages and the like, so that on the interface of the second application program, the user can easily learn the condition of the first application program without executing specific interface switching.

In any above technical solution, preferably, the information included within the transient interface includes: characters, images and/or functional interfaces included within the transient interface.

In the technical solution, the transient interface only has part of valid contents, e.g. characters, images, functional interfaces, etc., and then merely part of or all of the contents can be called out, so that the user can quickly acquire valid information. The above technical solutions can satisfy different requirements of different users with regard to a transient interface, and prevent the user experience from being affected by a display time being too long or too short.

### Brief Description of the Drawings

Fig. 1 shows a schematic flow diagram of a display processing method for a transient interface according to an embodiment of the present invention;
Fig. 2 shows a schematic diagram of a transient interface according to an embodiment of the present invention;
Fig. 3 shows a schematic diagram illustrating that the transient interface is recalled according to an embodiment of the present invention;
Fig. 4 shows a schematic diagram illustrating that the transient interface is called out through a start instruction according to an embodiment of the present invention;
Fig. 5 shows a schematic diagram illustrating that the transient interface is called out through a collaboration instruction according to an embodiment of the present invention;
Fig. 6 shows a schematic diagram illustrating that the transient interface is called out when interface switching is performed within the same application program according to an embodiment of the present invention;
Fig. 7 and Fig. 8 show schematic diagrams illustrating that the content in the transient interface is recalled according to an embodiment of the present invention;
Fig. 9 shows a schematic diagram illustrating that the content of the application program is displayed in an identifier according to an embodiment of the present invention;
Fig. 10 shows a schematic block diagram of a terminal according to an embodiment of the present invention.

### Detailed Description of the Embodiments

In order to understand the above objects, features and advantages of the present invention more clearly, the present invention will be further described in detail below in combination with the accompanying drawings and specific embodiments. It should be noted that the embodiments of the present application and the features in the embodiments can be combined with each other without conflicts.

Many specific details are described below for sufficiently understanding the present invention, but the present invention may be further implemented by adopting other ways different from those described herein, so the protection scope of the present invention is not limited by the specific embodiments disclosed below.

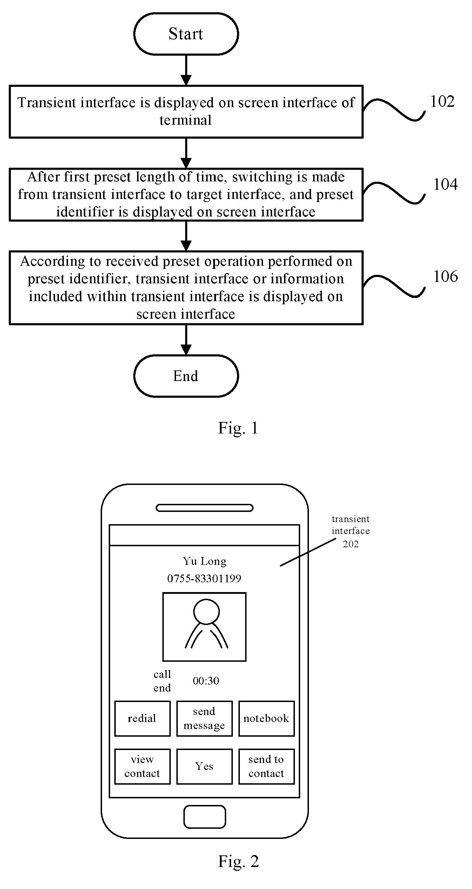

Fig. 1 shows a schematic flow diagram of a display processing method for a transient interface according to an embodiment of the present invention.

As shown in Fig. 1, a display processing method for a transient interface according to an embodiment of the present invention includes the following steps:
102, displaying a transient interface on a screen interface of a terminal;
104, after a first preset length of time, switching from the transient interface to a target interface, and displaying a preset identifier on the screen interface; and 106, according to a received preset operation performed on the preset identifier, displaying the transient interface or information included within the transient interface on the screen interface.

In the technical solution, the preset identifier is displayed on the screen interface after the transient interface disappears, so that the display time (i.e. the first preset length of time) of the transient interface can be set to be shorter, for example, just the time needed for an actual loading or processing procedure of an application program, then the target interface can be viewed or operated within the shortest time for a user who does not desire to see the transient interface, the transient interface or the information in the transient interface can be redisplayed through the preset identifier for a user who desires to see the content of the transient interface or operates the transient interface, and the situation that complete content cannot be viewed or the transient interface cannot be timely operated due to too short display time of the transient interface is avoided.

Of course, the disappearance control of the transient interface obviously can be judged by adopting other conditions besides the time condition. For example, as a specific embodiment, whether a preset gesture operation is received (or whether a preset gesture operation is received within a preset time) can be judged, and the transient interface disappears under the condition that the preset gesture operation is received.

Meanwhile, the preset identifier can be set to be very small and even can be set to be semitransparent, and a user can change its display position on the screen interface by dragging for example, so that even if the preset identifier is displayed on the screen interface, it will not affect the viewing or operation of the user on the target interface. Specifically, the pattern, size, transparency and the like of the preset identifier can be preset by the manufacturer or set by the user according to the use habit.

The preset operation on the preset identifier can include: click, double click, long press, drag, drag for forming a preset locus and the like on the preset identifier.

As a display interface capable of disappearing automatically, the transient interface is applied in many scenarios. For example, in a specific embodiment, Fig. 2 shows a schematic diagram of a transient interface according to an embodiment of the present invention.

As shown in Fig. 2, after the call of a user ends, the content on the display screen needs to be switched back to the interface before the call. However, before switching, some operable function options, e.g. "redial", "send message", etc., can be provided for the user through the transient interface 202 based on possible demands of the user with regard to the "call behavior", so that the user can very conveniently call these functions without executing complicated operations such as searching and enabling multilevel menu options and the like in the terminal.

After the display time (e.g. the above-mentioned first preset length of time) set by the manufacturer or the user, the transient interface 202 can automatically disappear. However, when the display time is set to be relatively short, the user may not timely operate the transient interface 202 or finish viewing the content in the transient interface, but if the display time is too long, part of users who do not need transient interfaces may wait for too long time.

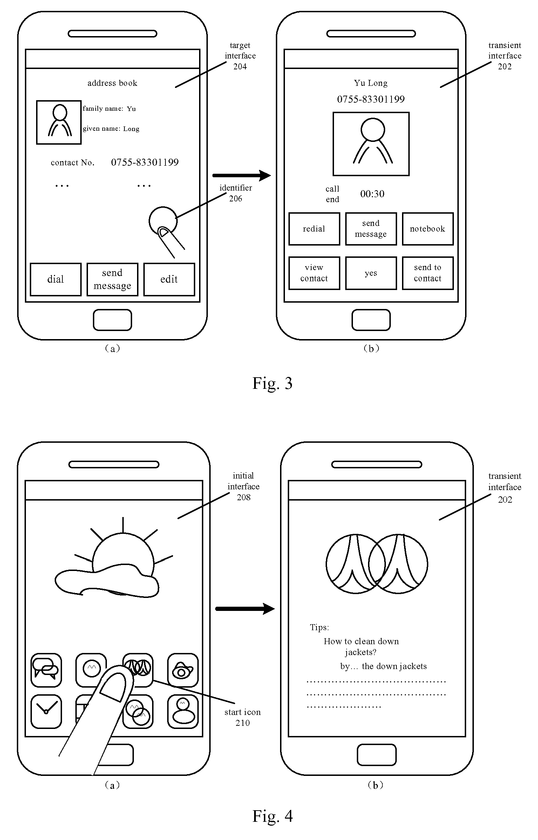

In order to reconcile the demand difference of different users for the transient interface 202, the present application proposes recalling of the transient interface 202, wherein Fig. 3 shows a schematic diagram illustrating that the transient interface is recalled according to an embodiment of the present invention.

As shown in Fig. 3, after the screen interface of the terminal is switched to the target interface 204, an identifier 206 (i.e. the above-mentioned preset identifier) can be displayed on the target interface 204, so that when the user executes a preset operation on the identifier 206, the transient interface 202 is recalled.

By recalling the transient interface 202 through the identifier 206, the first display time of the transient interface 202 can be set to be shortest, so that on the one hand, the waiting time of users who do not need the transient interface 202 can be shortened to the greatest extent; on the other hand, the transient interface 202 can be recalled through the identifier 206 for users who need the transient interface 202, and the problem that the display time is insufficient does not need to be worried about, and both of the users are satisfied.

The preset operation of recalling the transient interface 202 through the identifier 206 may include: click, double click, long press, drag, drag for forming a preset locus and the like on the identifier 206.

Preferably, when the preset operation is received or the preset operation is not received within a second preset length of time, the displaying of the preset identifier (i.e. the identifier 206) is stopped.

In the technical solution, although the identifier 206 can be set to be very small or semitransparent and the like, it may still shield the content of the target interface 204 or be clicked by the user, thus affecting the use of the user. Therefore, the identifier 206 disappears after the second preset length of time to avoid the influence on the use of the user as much as possible.

Preferably, the method further includes: performing statistics on the number of times and/or the frequency that the transient interface 202 or the information included within the transient interface 202 is called out through the present identifier; and if the number of times and/or the frequency are greater than or equal to a preset number of times and/or a preset frequency, prolonging the first preset length of time and/or the second preset length of time.

In the technical solution, the user's preference of requirement for the transient interface 202 can be learnt by the above statistic operation. For example, when the number of times and/or the frequency are relatively high (greater than or equal to the preset number of times and/or the preset frequency), it indicates that the user tends to view or utilize the transient interface 202, and through prolonging the first preset length of time, the user can have longer time to view or operate the transient interface 202; and through prolonging the second preset length of time, the user can have longer time to call out the transient interface 202 or the information included within the transient interface 202 within longer time, and then view or operate the transient interface 202.

The display time of the transient interface 202 can be in the switching process of the display interface of the terminal, specifically, for example, the method may include: displaying an initial interface on the screen interface; and when receiving a switching instruction to the target interface, switching from the initial interface to the transient interface.

For example, under the scenario of the embodiment shown in Fig. 3, namely in the call process, the call interface (not shown in the figure) should be regarded as the initial interface, the interface before the call is regarded as the target interface 204, then after the call, the user clicks a "hangup" button on the call interface or the opposite party executes a hangup operation, and in order to facilitate the operation of the user on the one hand and to make transition for "stuck" phenomenon which may appear in the interface switching process on the other hand, the transient interface 202 is displayed to facilitate the operation of the user. In this case, the "hangup" operation on the initial interface (i.e. the call interface) is actually a close instruction on a "call application", so that the switching operation to the target interface 204 is started through the "close" operation.

Of course, in order to illustrate the above application scenario, the target interface 204 in Fig. 3 is a certain contact interface in an address book; but in fact, the target interface 204 corresponding to the close instruction may be any interface before the initial interface is started, and even includes a terminal desktop, namely a "desktop launcher" application.

Based on the above technical solution, with regard to the process description of the call scenario, when the initial interface is a call interface and the target interface 204 is an address book interface (or other application program such as a desktop launcher or the like), the initial interface and the target interface respectively belong to functional interfaces in different application programs.

Meanwhile, the transient interface 202 is called out through the close instruction in the above application scenario; as to more call modes of the transient interface 202, the interface switching processes between different application programs will be described in detail below in combination with more application scenarios.

Fig. 4 shows a schematic diagram illustrating that the transient interface is called out through a start instruction according to an embodiment of the present invention.

As shown in Fig. 4, it is supposed that the initial interface 208 belongs to a first application program, namely a desktop launcher, the transient interface 202 belongs to a second application program, namely a start interface of "Renren", and the target interface (not shown in the figure) should be a specific content interface of "Renren".

Under the application scenario, the user executes a start instruction to a "Renren" application icon (start icon 210) on the initial interface 208 to switch from the initial interface 208 to the transient interface 202, and the transient interface 202 disappears after the first preset length of time.

As a distinguishing type from the transient interface 202 shown in Fig. 2, the transient interface 202 in Fig. 4 is a "transition" interface provided in order to give sufficient response time for the application program. During waiting for complete start of the application, some content is displayed on the transient interface 202 for the user to read, for example, "tips..." in Fig. 4.

After the transient interface 202 disappears, the identifier 206 shown in Fig. 3 can be displayed on the target interface, and when the user does not finish reading the content in the transient interface 202, the user can recall the transient interface 202 through the identifier 206 to finish reading.

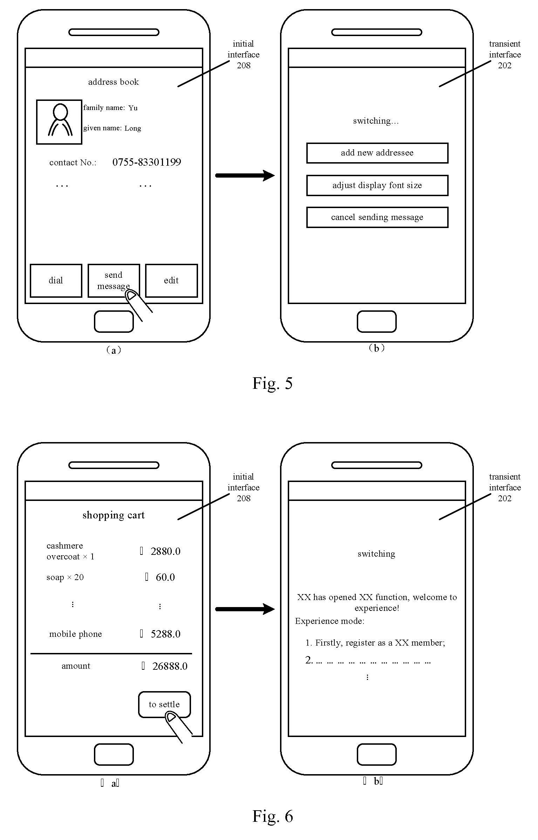

Fig. 5 shows a schematic diagram illustrating that the transient interface is called out through a collaboration instruction according to an embodiment of the present invention.

As shown in Fig. 5, it is supposed that the initial interface 208 belongs to a first application program, namely an address book, the transient interface 202 belongs to a second application program, namely a start interface of "short message", and the target interface (not shown in the figure) should be a short message sending interface of "short message".

Under the application scenario, the user executes collaborative calling to a "short message" application on the initial interface 208 to switch from the initial interface 208 to the transient interface 202, and the transient interface 202 disappears after the first preset length of time.

Similar to the type of the transient interface 202 shown in Fig. 4, the transient interface 202 in Fig. 5 is also a "transition" interface provided in order to give sufficient response time for the application program. During waiting for complete start of the application, some function options are displayed on the transient interface 202 for the user to operate, for example, "add new addressee", "adjust display font size" and the like in Fig. 5.

After the transient interface 202 disappears, the identifier 206 shown in Fig. 3 can be displayed on the target interface, and when the user does not finish selecting the function options in the transient interface 202, the user can recall the transient interface 202 through the identifier 206 to finish the selection operation.

Of course, besides the situations that the transient interface 202 is called between the different application programs shown in Fig. 3 to Fig. 5, the transient interface 202 may also be called during switching between different functional interfaces of the same application programs, that is, the initial interface and the target interface belong to different functional interfaces in the same application program.

Specifically, Fig. 6 shows a schematic diagram illustrating that the transient interface is called out when interface switching is performed within the same application program according to an embodiment of the present invention.

As shown in Fig. 6, it is supposed that the application program is a certain shopping application, then the initial interface 208 may be a shopping cart interface of a user, and when the user clicks "to settle" on the initial interface 208, it needs to be switched to a target interface (not shown in the figure), namely a settlement interface; wherein, in the process of switching from the shopping cart interface to the settlement interface, because the application program has certain processing procedure, particularly when the application program has a data interaction process with the network side, the transient interface 202 for the "transition" process needs to be displayed.

In the specific embodiment shown in Fig. 6, the transient interface 202 may include the literal description "XX has been opened..." for example; when the transient interface 202 disappears after the first preset length of time, the identifier 206 shown in Fig. 3 can be displayed on the target interface; and when the user does not finish reading the content displayed in the transient interface 202, the user can recall the transient interface 202 through the identifier 206 to finish reading.

In the above technical solution, through the identifier 206 shown in Fig. 3, direct recalling of the transient interface 202 is emphasized; however, the contents included within the transient interface 202, e.g. characters, images, functional interfaces, etc., obviously can be separately called out, and then the whole transient interface 202 does not need to be called out, so that first and second calling of the transient interface 202 are distinguished.

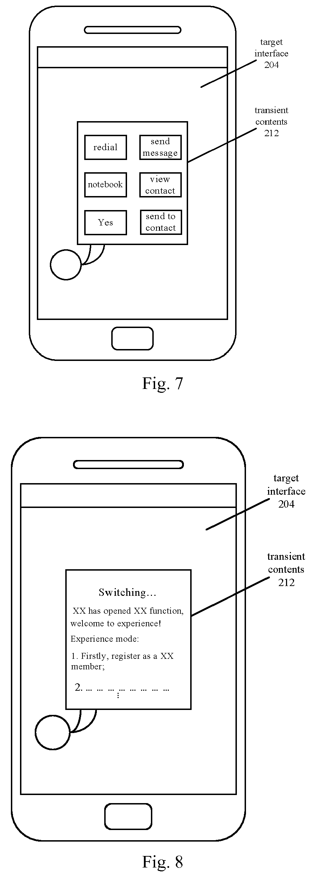

Specifically, Fig. 7 and Fig. 8 show schematic diagrams illustrating that the content in the transient interface is recalled according to an embodiment of the present invention.

As shown in Fig. 7, the transient interface 202 under the call scenario shown in Fig. 2 includes a plurality of functional interfaces (or function options), then when the user desires to re-operate the transient interface 202 through the identifier 206 shown in Fig. 3, namely when the functional interfaces are reselected, the terminal can merely acquire the functional interfaces and display the functional interfaces on the target interface 204 as transient contents 212 shown in Fig. 7.

As shown in Fig. 8, the transient interface 202 under the shopping scenario shown in Fig. 6 includes literal contents (obviously may also include others, e.g. images, links, etc.), then when the user desires to re-read the transient interface 202 through the identifier 206 shown in Fig. 3, the terminal can merely acquire specific literal contents and display the literal contents on the target interface 204 as transient contents 212 shown in Fig. 7.

Thus, as the transient interface 202 only has part of valid contents, e.g. characters, images, links, functional interfaces, etc., merely part of or all of the contents can be called out, so that the user can quickly acquire valid information

Moreover, when the initial interface 208 belongs to a first application program and the target interface 204 belongs to a second application program, the method may further include: acquiring application information and/or to-be-processed events of the first application program; and displaying the application information and/or to-be-processed events within the preset identifier 206.

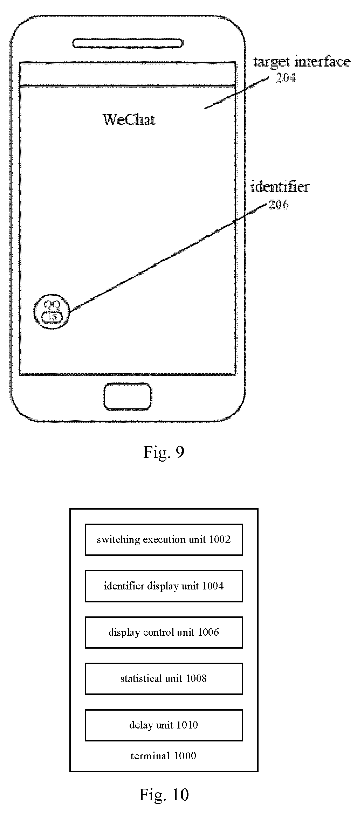

Specifically, as shown in Fig. 9, it is supposed that the first application program is "QQ", while the second application program is "WeChat", that is, the current target interface 204 is an application program interface corresponding to "WeChat". Then, the identifier 206 is displayed on the target interface 204, and information corresponding to the first application program "QQ" is displayed in the identifier 206.

Further, the identifier 206 may include the application information of the first application program, namely "QQ" shown in the figure, thus prompting the user that before switching to the target interface 204, the application program running on the terminal is "QQ"; or, when the identifier 206 further includes other content, it may prompt the user that the information in the identifier 206 is the content relevant with "QQ". Meanwhile, the content included within the identifier 206 may also be to-be-processed events, and still taking "QQ" as an example, it may include: number, sender, content or summary and the like of instant messages received by QQ, for example, "15" shown in the figure expresses currently received 15 unread instant messages.

In the technical solution, the first application program is an application program displayed on the terminal before the interface switching operation of the present invention; the application information may include e.g. the name, icon and the like of the first application program, so that the user can be reminded of relevant condition of the first application program by the application information; the to-be-processed events may include messages received in the first application program, update prompt and the like, and further, may include the number, sender, content or summary of the messages and the like, so that on the interface of the second application program, the user can easily learn the condition of the first application program without executing specific interface switching.

Corresponding to various above-mentioned application functions, the present invention proposes corresponding functional modules. Specifically, Fig. 10 shows a schematic block diagram of a terminal according to an embodiment of the present invention.

As shown in Fig. 10, a terminal 1000 according to an embodiment of the present invention includes: a switching execution unit 1002, used for displaying a transient interface on a screen interface of the terminal 1000, and after a first preset length of time, switching from the transient interface to a target interface; an identifier display unit 1004, used for displaying a preset identifier on the screen interface when the screen interface is switched from the transient interface to the target interface; and a display control unit 1006, used for, according to a received preset operation performed on the preset identifier, displaying the transient interface or information included within the transient interface on the screen interface.

In the technical solution, the preset identifier is displayed on the screen interface after the transient interface disappears, so that the display time (i.e. the first preset length of time) of the transient interface can be set to be shorter, for example, just the time needed for an actual loading or processing procedure of an application program, then the target interface can be viewed or operated within the shortest time for a user who does not desire to see the transient interface, the transient interface or the information in the transient interface can be redisplayed through the preset identifier for a user who desires to see the content of the transient interface or operates the transient interface, and the situation that complete content cannot be viewed or the transient interface cannot be timely operated due to too short display time of the transient interface is avoided.

Of course, the disappearance control of the transient interface obviously can be judged by adopting other conditions besides the time condition. For example, as a specific embodiment, whether a preset gesture operation is received (or whether a preset gesture operation is received within a preset time) can be judged, and the transient interface disappears under the condition that the preset gesture operation is received.

Meanwhile, the preset identifier can be set to be very small and even can be set to be semitransparent, and a user can change its display position on the screen interface by dragging for example, so that even if the preset identifier is displayed on the screen interface, it will not affect the viewing or operation of the user on the target interface. Specifically, the pattern, size, transparency and the like of the preset identifier can be preset by the manufacturer or set by the user according to the use habit.

The preset operation on the preset identifier can include: click, double click, long press, drag, drag for forming a preset locus and the like on the preset identifier.

In the above technical solution, preferably, the identifier display unit 1004 is further used for: when the terminal 1000 receives the preset operation or the terminal 1000 does not receive the preset operation within a second preset length of time, stopping the displaying of the preset identifier.

In the technical solution, although the preset identifier can be set to be very small or semitransparent and the like, it may still shield the content of the target interface or be clicked by a user, thus affecting the use of the user. Therefore, the preset identifier disappears after the second preset length of time to avoid the influence on the use of the user as much as possible.

In any above technical solution, preferably, the terminal further includes: a statistical unit 1008, used for performing statistics on the number of times and/or the frequency that the transient interface or the information included within the transient interface is called out through the present identifier; and a delay unit 1010, used for, if the number of times and/or the frequency are greater than or equal to a preset number of times and/or a preset frequency, prolonging the first preset length of time and/or the second preset length of time.

In the technical solution, the user's preference of requirement for the transient interface can be learnt by the above statistic operation. For example, when the number of times and/or the frequency are relatively high (greater than or equal to the preset number of times and/or the preset frequency), it indicates that the user tends to view or utilize the transient interface, and through prolonging the first preset length of time, the user can have longer time to view or operate the transient interface; through prolonging the second preset length of time, the user can have longer time to call out the transient interface or the information included within the transient interface, and then view or operate the transient interface.

In any above technical solution, preferably, the switching execution unit 1002 is further used for: when displaying an initial interface on the screen interface and receiving a switching instruction to the target interface, switching from the initial interface to the transient interface.

In the technical solution, as a preferred implementation, the transient interface may appear in the interface switching process, and the transient interface realizes interface switching transition or provides an operating function on the initial interface or the target interface for a user.

In the above technical solution, preferably, the initial interface and the target interface belong to different functional interfaces in the same application program; or the initial interface and the target interface belong to functional interfaces in different application programs respectively.

In the technical solution, no matter on the different functional interfaces in the same application program or on the functional interfaces in different application programs, both the transient interface and the preset identifier can be displayed, so that "transition" in the interface switching process can be smoothly realized, and different requirements of different users for the transient interface can be met.

In the above technical solution, preferably, when the initial interface belongs to a first application program and the target interface belongs to a second application program, the switching instruction includes: a close instruction on the first application program, or a start instruction or collaboration instruction on the second application program.

In the technical solution, the first application program and the second application program may be any application programs in the terminal 1000. For example, the second application program may be any application program when the user starts the first application program, specifically, the second application program may be a desktop launcher (the user previously starts the first application program through the application icon of the first application program), or other application program (the user previously calls the first application program through a corresponding calling interface on the interface of the second application program).

Of course, the first application program may also be a desktop launcher, and when the first application program is the desktop launcher, the switching instruction may be a start instruction on the second application program. Moreover, when neither the first application program nor the second application program is a desktop launcher, it indicates that the first application program has a calling interface for the second application program, and collaborative calling of the second application program is realized through the collaboration instruction.

In the above technical solution, preferably, when the initial interface belongs to the first application program and the target interface belongs to the second application program, the identifier display unit is further used for: acquiring application information and/or to-be-processed events of the first application program; and displaying the application information and/or to-be-processed events within the preset identifier.

In the technical solution, the first application program is an application program displayed on the terminal before the interface switching operation of the present invention; the application information may include e.g. the name, icon and the like of the first application program, so that the user can be reminded of relevant condition of the first application program by the application information; the to-be-processed events may include messages received in the first application program, update prompt and the like, and further, may include the number, sender, content or summary of the messages and the like, so that on the interface of the second application program, the user can easily learn the condition of the first application program without executing specific interface switching.

In any above technical solution, preferably, the information included within the transient interface includes: characters, images and/or functional interfaces included within the transient interface.

In the technical solution, the transient interface only has part of valid contents, e.g. characters, images, functional interfaces, etc., and then merely part of or all of the contents can be called out, so that the user can quickly acquire valid information. The technical solutions of the present invention are described in detail above in combination with the accompanying drawings; considering that in relevant technologies, the requirements of different users with regard to the display time of the transient interface are different, and are difficult to reconcile, thus, the present invention proposes a display processing method for a transient interface and a terminal, which can satisfy different requirements of different users with regard to the transient interface and prevent the user experience from being affected by the display time being too long or too short.

According to an implementation of the present invention, further provided is a program product stored in a nonvolatile machine readable medium and used for processing the displaying of a transient interface, the program product including a machine executive instruction enabling a computer system to execute the following steps: displaying a transient interface on a screen interface of a terminal; after a first preset length of time, switching from the transient interface to a target interface, and displaying a preset identifier on the screen interface; and according to a received preset operation performed on the preset identifier, displaying the transient interface or information included within the transient interface on the screen interface. According to an implementation of the present invention, further provided is a nonvolatile machine readable medium storing a program product for processing the displaying of a transient interface, the program product including a machine executive instruction enabling a computer system to execute the following steps: displaying a transient interface on a screen interface of a terminal; after a first preset length of time, switching from the transient interface to a target interface, and displaying a preset identifier on the screen interface; and according to a received preset operation performed on the preset identifier, displaying the transient interface or information included within the transient interface on the screen interface. According to an implementation of the present invention, further provided is a machine readable program, which enables a machine to execute the display processing method for a transient interface in any above technical solution. According to an implementation of the present invention, further provided is a storage medium storing a machine readable program, wherein the machine readable program enables a machine to execute the display processing method for a transient interface in any above technical solution.

Only preferred embodiments of the present invention are described above, but the present invention is not limited thereto. Various modifications and alterations may be made to the present invention for those skilled in the art. Any modifications, equivalent substitutions, improvements and the like made within the spirit and principle of the present invention shall fall into the protection scope of the present invention.

## Claims

1. A display processing method for a transient interface, comprising:
displaying a transient interface on a screen interface of a terminal;
after a first preset length of time, switching from the transient interface to a target interface, and displaying a preset identifier on the screen interface; and
according to a received preset operation performed on the preset identifier, displaying the transient interface or information included within the transient interface on the screen interface.

2. The display processing method of claim 1, wherein when the preset operation is received or the preset operation is not received within a second preset length of time, the displaying of the preset identifier is stopped.

3. The display processing method of claim 1, further comprising:
performing statistics on the number of times and/or the frequency that the transient interface or the information included within the transient interface is called out through the present identifier; and
if the number of times and/or the frequency are greater than or equal to a preset number of times and/or a preset frequency, prolonging the first preset length of time and/or the second preset length of time.

4. The display processing method of claim 1, further comprising:
displaying an initial interface on the screen interface; and
when receiving a switching instruction to the target interface, switching from the initial interface to the transient interface.

5. The display processing method of claim 4, wherein the initial interface and the target interface belong to different functional interfaces in the same application program;
or the initial interface and the target interface belong to functional interfaces in different application programs respectively.

6. The display processing method of claim 5, wherein when the initial interface belongs to a first application program and the target interface belongs to a second application program, the switching instruction comprises: a close instruction on the first application program, or a start instruction or collaboration instruction on the second application program.

7. The display processing method of claim 5, wherein when the initial interface belongs to the first application program and the target interface belongs to the second application program, the method further comprising:
acquiring application information and/or to-be-processed events of the first application program; and
displaying the application information and/or to-be-processed events within the preset identifier.

8. The display processing method of claim 1, wherein the process of displaying the information included within the transient interface according to the received preset operation performed on the preset identifier comprises:
extracting characters, images and/or functional interfaces included within the transient interface and displaying the same on the screen interface.

9. A terminal, comprising:
a switching execution unit, used for displaying a transient interface on a screen interface of the terminal, and after a first preset length of time, switching from the transient interface to a target interface;
an identifier display unit, used for displaying a preset identifier on the screen interface when the screen interface is switched from the transient interface to the target interface; and
a display control unit, used for, according to a received preset operation performed on the preset identifier, displaying the transient interface or information included within the transient interface on the screen interface.

10. The terminal of claim 9, wherein the identifier display unit is further used for: when the terminal receives the preset operation or the terminal does not receive the preset operation within a second preset length of time, stopping the displaying of the preset identifier.

11. The terminal of claim 9, further comprising:
a statistical unit, used for performing statistics on the number of times and/or the frequency that the transient interface or the information included within the transient interface is called out through the present identifier; and
a delay unit, used for, if the number of times and/or the frequency are greater than or equal to a preset number of times and/or a preset frequency, prolonging the first preset length of time and/or the second preset length of time.

12. The terminal of claim 9, wherein the switching execution unit is further used for: when displaying an initial interface on the screen interface and receiving a switching instruction to the target interface, switching from the initial interface to the transient interface.

13. The terminal of claim 12, wherein the initial interface and the target interface belong to different functional interfaces in the same application program;
or the initial interface and the target interface belong to functional interfaces in different application programs respectively.

14. The terminal of claim 13, wherein when the initial interface belongs to a first application program and the target interface belongs to a second application program, the switching instruction comprises: a close instruction on the first application program, or a start instruction or collaboration instruction on the second application program.

15. The terminal of claim 13, wherein when the initial interface belongs to the first application program and the target interface belongs to the second application program, the identifier display unit is further used for:
acquiring application information and/or to-be-processed events of the first application program; and displaying the application information and/or to-be-processed events within the preset identifier.

16. The terminal of claim 9, wherein the information included within the transient interface comprises: characters, images and/or functional interfaces included within the transient interface.
